(19) **Europäisches Patentamt**

**European Patent Office**

**Office européen des brevets**

(11) **EP 0 900 765 B1**

(12) **EUROPÄISCHE PATENTSCHRIFT**

(45) Veröffentlichungstag und Bekanntmachung des Hinweises auf die Patenterteilung:
**12.03.2003 Patentblatt 2003/11**

(51) Int Cl.⁷: **C02F 1/42**, A47L 15/42, B01J 49/00

(21) Anmeldenummer: **98116087.2**

(22) Anmeldetag: **26.08.1998**

(54) **Vorrichtung zur Wasserenthärtung**

Device for water softening

Dispositif pour l'adoucissement de l'eau

(84) Benannte Vertragsstaaten:
**CH DE ES FR GB IT LI**

(30) Priorität: **03.09.1997 DE 19738486**
**17.12.1997 DE 19756114**

(43) Veröffentlichungstag der Anmeldung:
**10.03.1999 Patentblatt 1999/10**

(73) Patentinhaber: **AWECO APPLIANCE SYSTEMS GmbH & Co. KG**
**88099 Neukirch (DE)**

(72) Erfinder: **Zucholl, Klaus, Dr.**
**68199 Mannheim (DE)**

(74) Vertreter: **Patentanwälte**
**Eisele, Otten, Roth & Dobler**
**Karlstrasse 8**
**88212 Ravensburg (DE)**

(56) Entgegenhaltungen:
| | |
|---|---|
| **EP-A- 0 754 495** | **DE-A- 1 642 488** |
| **DE-A- 2 929 363** | **FR-A- 2 145 598** |
| **US-A- 4 320 010** | **US-A- 4 917 794** |

**Beschreibung**

Die Erfindung betrifft eine Vorrichtung zur Wasserenthärtung nach dem Oberbegriff des Anspruchs 1.

In Haushaltsmaschinen, insbesondere Geschirrspülmaschinen sind Wasserenthärter seit längerer Zeit Stand der Technik. Die Spülmaschinen, die in der Regel einen Ionentauscher, einen Salzbehälter sowie eine Wasserdosiereinrichtung aufweisen, müssen manuell auf die am Einsatzort vorhandene Rohwasserhärte eingestellt werden. Anhand der fest eingestellten Rohwasserhärte und der durch den Ionentauscher geflossenen Wassermenge wird der Regenerationszeitpunkt des Enthärters eingestellt. Die durchgeflossene Wassermenge kann entweder mittels eines Durchflußzählers oder anhand der durchgeführten Spülgänge bestimmt werden. Zur Regeneration wird durch eine dosierte Wassermenge aus der Wasserdosiervorrichtung eine Salzsole aus einem Salzbehälter verdrängt und in den Ionentauscher gebracht. Mit Hilfe der hoch konzentrierten Salzlösung wird der Ionentauscher regeneriert. Nach dem Regenerationsvorgang wird die Sole aus dem Enthärter ausgespült.

Die bekannten Spülmaschinen mit einem Wasserenthärter wie oben angeführt haben einige Nachteile. Die Rohwasserhärte muß bekannt sein und manuell eingestellt werden, wobei häufig Fehlbedienungen erfolgen. Bei wechselnder Rohwasserhärte, die nicht erkannt wird, kann die Enthärtersteuerung auf einer zu niedrigen Wasserhärte eingestellt sein. Wird eine wechselnde Rohwasserhärte erkannt, so muß die Enthärtersteuerung auf die höchste vorkommende Wasserhärte eingestellt werden. Falls trotz Erschöpfung des Regeneriermittels die Spülmaschine weiterhin betrieben wird, wird der Ionentauscher übermäßig stark mit Härtebildnern beladen. Eine anschließend durchgeführte Regenerierung kann dann den optimalen Ionentauscherzustand nicht wieder herstellen, wobei es bei nachfolgenden Spülprozessen zur Überschreitung der maximalen zulässigen Wasserhärte kommt.

Aufgrund der Charakeristik des Ionentauschermaterials produziert ein frisch regenerierter Ionentauscher ein Wasser mit einer Resthärte von kleiner als 1°dH. Für einen optimalen Spülprozess sind jedoch bei modernen Spülmitteln Resthärten von ca. 6°dH zulässig. Bei zu weichem Wasser kann es zudem zu einer sog. Glaskorrosion beim Spülen von Gläsern kommen.

Um die Ionentauscherkapazität besser zu nutzen, ist man daher bereits dazu übergegangen, zu weiches Reinwasser mit Rohwasser zu verschneiden, um die optimale Resthärte des Spülwassers zu erzeugen. Eine derartige Vorrichtung ist beispielsweise in der DE 195 12 011 bekannt geworden. Hiermit läßt sich eine längere Betriebszeit zwischen zwei Regenerationen erreichen. Dies setzt jedoch die Kenntnis der Rohwasserqualität und die Kenntnis des Beladungszustandes bzw. der Restkapazität des Ionentauschers voraus. Bei den bekannten Vorrichtungen wird der Beladungszustand des Ionentauschers über die Menge des enthärteten Reinwassers in Kenntnis der Rohwasserhärte ermittelt und bei einem vorgegebenen Beladungszustand regeneriert. Nach dem Regenerationsvorgang geht man davon aus, daß der Ionentauscher wieder seine volle Kapazität erreicht hat und setzt diese Vorgehensweise fort. Dieses Verfahren ist im störungsfreien Betrieb anwendbar. Wird jedoch einmal nicht vollständig regeneriert, beispielsweise aufgrund zu geringer Salzkonzentration in der Sole oder nimmt die Rohwasserhärte unbemerkt zu, so läßt sich der optimale Regenerierzeitpunkt für den Ionentauscher nach diesem Verfahren nicht mehr exakt bestimmen.

In den Druckschrifen DE 1 642 488, US 4 917 794, DE 2 929 363 und FR 7 225 129 werden Vergleichsmessungen merherer Leitwertsensoren durchgeführt.

Aufgabe der Erfindung ist es daher, eine Vorrichtung zur Wasserenthärtung vorzuschlagen, bei der der Beladungszustand des Ionentauschers unmittelbar kontrollierbar ist.

Diese Aufgabe wird ausgehend von einem Stand der Technik der einleitend genannten Art durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Vorrichtung zur Wasserenthärtung dadurch aus, daß wenigstens ein Leitwertsensor zur Messung der Leitfähigkeit des Ionentauschermaterials vorhanden ist. Die Erfindung nutzt hierbei den Umstand, daß der Leitwert bzw. der elektrische Widerstand des Ionenaustauschermaterials sehr stark von der Art der gebundenen Ionen abhängt. Insofern kann die Leitwertmessung eine signifikante Aussage über den Beladungszustand bzw. die Restkapazität des Ionentauschers geben.

In einer vorteilhaften Weiterbildung der Erfindung werden mehrere Leitwertsensoren in unterschiedlicher Position bezüglich der Flußrichtung des zu enthärtenden Wassers angeordnet. Dies ermöglicht die lokal aufgelöste Beobachtung des Beladungsgrades des Ionentauschers. Die Kapazität des Ionentauschers wird hierbei im Bereich des Wassereintritts zuerst erschöpft. Mit zunehmendem Beladungsgrad des Ionentauschers werden im verstärkten Ausmaß auch die Bereiche in der Nähe des Wasseraustritts mit Härtebildnern beladen. Dieser Vorgang läßt sich durch zwei oder mehrere unterschiedlich positionierte Leitwertsensoren überwachen.

In der Praxis hat es sich bewährt, den Enthärter in Form einer Ionentauschersäule wie bislang bekannt mit Flußrichtung von unten nach oben auszubilden, wobei ein Leitwertsensor im unteren Drittel und/oder ein weiterer Leitwertsensor im oberen Drittel der Säule angeordnet ist. Die Ausbildung des Enthärters als in vertikaler Richtung von unten nach oben geflossene Säule bewirkt eine gleichmäßige Belastung des Enthärtermaterials über den gesamten Querschnitt der Säule. Die genannte Sensoranordnung hat sich als ausreichend für eine gute Überwachung des Enthärters erwiesen.

Vorzugsweise wird ein derartiger Leitwertsensor aus zwei Elektroden aus korrosionsfestem Material gebildet. Über den durch diese Elektroden durch das Ionentauschermaterial fließende Strom läßt sich der gewünschte Leitwert ermitteln. Die Ausbildung aus korrosionsfestem Material verhindert eine Änderung des Übergangwiderstandes beim Übergang von der Elektrode in den im Ionentauscher befindlichen Elektrolyten durch Oberflächenbelegung der Elektroden und verhindert somit eventuelle Fehlereinflüße an dieser Stelle.

In einer weiteren vorteilhaften Ausführung der Erfindung wird ein Leitwertsensor durch zwei einander gegenüberliegend angeordnete Elektroden gebildet. Hierdurch ergibt sich bei der Messung ein Mittelwert über den gesamten zwischen diesen beiden Elektroden liegenden Bereich des Enthärters. Eine solche Messung kann auch mit diagonal gegenüber liegenden Elektroden durchgeführt werden, so daß bei der Messung auch eine gewisse Mittelung in Flußrichtung des Enthärters erfolgt.

In einer anderen Ausführungsform der Erfindung kann der Leitwert mittels einer oder mehreren Spulen zur induktiven Leitwertmessung erfaßt werden. Die Verwendung von Spulen zur Leitwertmessung hat den Vorteil, daß die eigentlichen Sensorelemente nicht mit dem Ionentauschermaterial und dem Elektrolyt in Berührung kommen.

Weiterhin hat es sich als vorteilhaft erwiesen, die Temperatur des Ionentauschermaterials mit einem Temperatursensor zu überwachen. Da der Leitwert des Ionentauschermaterials von der Temperatur abhängt, läßt sich durch Berücksichtigung der Temperatur ein zuverlässigerer Wert für den Beladungszustand des Ionentauschers bestimmen.

Aus den mit Hilfe eines oder mehreren Leitwertsensoren gemessenen Werten kann der Beladungsgrad des Ionentauschers berechnet werden. Hierfür wird vorzugsweise eine elektronische Auswerteeinheit vorgesehen. Der Beladungsgrad des Ionentauschers läßt sich um so genauer bestimmen, je mehr weitere Einflußparameter, die neben dem Leitwert des Ionentauschermaterials in die Leitwertmessung durch den oder die Sensoren eingehen, bekannt sind und berücksichtigt werden. Daher wird die Auswerteeinheit vorzugsweise so ausgebildet, daß derartige Einflußparameter in der Auswertung berücksichtigt werden.

In einer bestimmten Ausführungsform der Erfindung finden hierbei der Durchtrittswiderstand zwischen Elektrode und Elektrolyt, der Widerstand des Wassers und/oder der Korngrenzenwiderstand des Ionentauschermaterials Berücksichtigung bei der Berechnung des Beladungsgrades des Ionentauschers. Diese beispielhaft genannten Widerstände stellen die hauptsächlichen in die Messung eingreifenden Widerstände neben dem eigentlichen Widerstand des Ionentauschermaterials dar.

Der Widerstand des Wassers kann durch eine Leitwertmessung des Rohwassers oder des Reinwassers mittels einem entsprechend angeordneten Leitwertsensors erfaßt werden.

Nicht nur bei der Verwendung von Spulen zur induktiven Leitwertmessung ist es von Vorteil, die Leitwertmessung mittels Wechselspannung durchzuführen. Die Leitwertmessung mittels Wechselspannung hat den Vorteil, daß außer über die verschiedenen ohmschen Widerstände auch ein Strom über zusätzlich vorhandene Kapazitäten fließen kann. Je nach verwendeter Frequenz kann hierbei beispielsweise ein ohmscher Widerstand, zu dem eine Kapazität parallel im System vorhanden ist, gewissermaßen kurzgeschlossen werden und somit als Fehlerquelle ausgeschalten werden.

Vorteilhafterweise wird in der Auswerteeinheit die sogenannte Doppelschichtkapazität zwischen der Elektrode und dem Elektrolyt und/oder die Korngrenzenkapazität zwischen benachbarten Ionentauscherkörnern in einer Ionentauscherschüttung berücksichtigt.

Eine Möglichkeit unter Verwendung eines Ersatzschaltbildes zur Berücksichtigung der genannten Einflußparameter wird weiter unten anhand des Ausführungsbeispiels mit Hilfe eines Ersatzschaltbildes näher erläutert.

In einer Weiterbildung der Erfindung wird die Bestimmung der Ionentauscherkapazität bzw. des Beladungsgrades des Ionentauschers aus der Differenz der Widerstandswerte des vollständig beladenen und des vollständig regenerierten Ionentauschers durchgeführt. Hierbei wird vorzugsweise der durch oben genannte Einflußparameter bereinigte widerstandswert des Ionentauschermaterials herangezogen. Auch eine Verwendung des Quotienten der Widerstandswerte des vollständig beladenen bzw. des vollständig regenerierten Ionentauschers kann als Maß für den Beladungsgrad des Ionentauschers herangezogen werden.

In einer Weiterbildung der Erfindung wird der Beladungsgrad des Ionentauschers als Stellgröße für eine Regeleinheit des Regeneriervorgangs verwendet. Nachdem durch eine oder mehrere der oben angeführten Maßnahmen der Beladungsgrad des Ionentauschers erfassbar ist, so kann aufgrund des zu ermittelnden Wertes zuverlässig eine Regenerierung des Ionentauschers eingeleitet werden, sobald dies erforderlich ist.

Als Schaltkriterium zum Einschalten eines Regeneriervorganges kann hierbei beispielsweise das Überschreiten eines Grenzwertes des Ionentauscherwiderstandes verwendet werden.

In einer anderen Ausführungsform der Erfindung wird ein Regeneriervorgang durch Überschreitung eines ersten Grenzwertes und anschließender Unterschreitung eines zweiten Grenzwertes der Änderungsgeschwindigkeit des Ionentauscherwiderstandes eingeleitet. Die Änderungsgeschwindigkeit des Ionentauscherwiderstandes ist gleichbedeutend mit der Menge von Härtebildnern, die pro Zeiteinheit ausgetauscht werden. Bei Erschöpfung des Ionentauschers nimmt die Menge der ausgetauschten Härtebildner pro Zeiteinheit naturgemäß ab.

Eine weitere Möglichkeit für das Startkriterium eines Regeneriervorganges liegt bei der Verwendung des Durchlaufs eines Maximums in der Leitwertdifferenz zweier in Flußrichtung nacheinander angeordneten Leitwertsensoren. Bei diesem Startkriterium wird die Enthärterkapazität des Enthärters nicht vollständig genutzt, es ist jedoch sichergestellt, daß stets ausreichend enthärtetes Wasser in genügender Menge vorhanden ist.

In einer besonders vorteilhaften Ausführungsform wird zusätzlich die Konzentration der Regeneriersole bestimmt.

Dies läßt sich durch die vorhandenen Leitwertsensoren während der Regeneration durchführen, da der durch die Sensoren gemessene Leitwert bei mit Sole gefülltem Enthärterbehälter überwiegend von der stark konzentrierten Sole mit frei beweglichen Ladungsträgern bestimmt wird.

Durch die Extremwerte bei aufeinanderfolgenden Leitwertmessungen der Sole bei unterschiedlichen Regeneriervorgängen ist im Laufe der Zeit regelmäßig wiederkehrend der Leitwert der gesättigten Sole bestimmbar, die bei ausreichendem Salzvorrat in den Ionentauscher gespült wird. Dieser Leitwert der gesättigten Sole kann wiederum zur Kalibrierung eines Leitwertsensors herangezogen werden. Durch diese Maßnahme ist die erfindungsgemäße Vorrichtung gewissermaßen selbst kalibrierend, wobei auch die zeitlich dazwischen liegenden Leitwerte einer weniger konzentrierten nicht gesättigten Salzsole regelmäßig erfassbar sind.

Bei geringerer Konzentration der Regeneriersole besteht mit Hilfe der erfindungsgemäßen Vorrichtung die Möglichkeit, zwei oder mehrere Regeneriervorgänge unmittelbar aufeinanderfolgend einzuleiten bzw. mehr Regeneriersole durch den Enthärter zu führen. Hierdurch ist eine gute Regenerierung auch bei unvollständigem Salzvorrat möglich, so daß zum einen der Salzverbrauch reduziert werden kann und zum anderen auch bei geringerer Salzkonzentration eine zuverlässige Wasserenthärtung stattfinden kann.

Weiterhin ist es mit einer erfindungsgemäßen Vorrichtung möglich, die Soleausspülung aus dem Ionentauscher zu kontrollieren und dementsprechend zu regeln. Hierdurch ist gewährleistet, keine etwaige im Ionentauscher verbleibende Sole in dem anschließenden Arbeitsvorgang der mit der erfindungsgemäßen Enthärtervorrichtung versehenen Maschine gelangt. So wird beispielsweise vermieden, daß Geschirr in einem Geschirrspüler nach einem Regeneriervorgang in Berührung mit einer derartigen Sole kommt.

Vorzugsweise wird bei einer erfindungsgemäßen Enthärtervorrichtung eine Vorrichtung zum dosierten Verschneiden von Roh- und Reinwasser vorgesehen. Diese Vorrichtung zum Verschneiden von Roh- und Reinwasser nutzt den Umstand, daß das bei voll regeneriertem Ionentauscher enthärtete Reinwasser an sich weicher ist, als es für viele vorgesehene Arbeitsschritte, beispielsweise zum Geschirrspülen benötigt wird. Weiterhin ist es für viele Anwendungsfälle, beispielsweise beim Spülen von Glas sogar von Vorteil, wenn kein Reinwasser mit minimalem Härtegrad bei vollständig regeneriertem Enthärter verwendet wird. Zudem läßt sich durch Verschneiden des Reinwassers mit Rohwasser die Beladungskapazität des Ionentauschers für ein größeres Wasservolumen und damit für mehrere Bearbeitungsvorgänge, beispielsweise Spülgänge, nutzen. Mit zunehmendem Beladungsgrad des Ionentauschers steigt der Härtegrad des enthärteten Reinwassers an. Somit ist der Härtegrad des üblicherweise aus dem Enthärter ausströmenden Reinwassers nicht konstant. Mit Hilfe einer Vorrichtung zum Verschneiden von Roh- und Reinwasser ist es möglich, durch entsprechende Regelung den Härtegrad des gemischten Reinwassers nahezu konstant zu halten.

Insbesondere zum dosierten Mischen von Roh- und Reinwasser ist es vorteilhaft, wenn ein Durchflußmesser im Wasserzulauf oder aber für das Roh- und/oder Reinwasser getrennt vorgesehen ist. Weiterhin kann, sofern die durch den Ionentauscher geflossene Wassermenge, beispielsweise mit Hilfe eines solchen Durchflußmessers bekannt ist, durch die beim Durchfluß durch den Ionentauscher auftretende Veränderung des Beladungsgrades bzw. der Ionentauscherkapazität die entsprechende Rohwasserhärte bestimmt werden. Somit sind zur Rohwasserhärtemessung keine zusätzlichen Sensoren erforderlich.

In einer weiteren vorteilhaften Ausführungsform der Erfindung wird mit Hilfe des Beladungsgrades des Ionentauschers auch die Reinwasserhärte bestimmt. Hierzu ist außer dem Beladungszustand des Ionentauschers lediglich die Kenntnis der entsprechenden Rohwasserhärte erforderlich. Diese Rohwasserhärte kann beispielsweise wie vor beschrieben ermittelt werden.

Nach einer Bestimmung beider Härtegrade des Reinwassers und des Rohwassers, beispielsweise mit den oben angeführten Vorgehensweisen, ist es ohne vorherige Einstellung des Härtegrades des Rohwassers möglich, mit Hilfe einer geregelten Vorrichtung zum Verschneiden den gewünschten Härtegrad des Reinwassers einzustellen.

Das Verscheiden des Reinwassers mit Rohwasser kann hierbei in bekannter Weise beispielsweise durch getaktetes Öffnen und Schließen eines Ventils in einer Bypassleitung parallel zum Enthärter erfolgen. Denkbar wäre jedoch auch eine entsprechende Vorrichtung zur Verstellung der Querschnittsöffnungen in der Durchflußleitung zum Enthärter bzw. vom Enthärter sowie in einer Bypassleitung.

Die erfindungsgemäße Vorrichtung zur Wasserenthärtung eignet sich besonders für Haushaltsmaschinen wie Spülmaschinen, Waschmaschinen oder dergleichen. Generell ist jedoch durchaus eine Anwendung überall dort vorstellbar, wo eine kontrollierte Wasserenhärtung mit Hilfe von Ionentauschermaterial vorgenommen werden soll.

Ein Ausführungsbeispiel der Erfindung ist in der Zeichnung dargestellt und wird anhand der Figuren nachfolgend näher erläutert.

Im Einzelnen zeigen

Fig. 1 eine schematische Darstellung einer erfindungsgemäßen Enthärtervorrichtung,

Fig. 2 ein Diagramm zur Veranschaulichung der mit Leitwertsensoren gemessenen Meßwerte,

Fig. 3 ein Ersatzschaltbild zur Veranschaulichung der dem Enthärtersystem vorliegendem Widerstands- und Kapazitätsverhältnisse und

Fig. 4 die Darstellung der Leitwertmessung bei wechselndem Rohwasserleitwert.

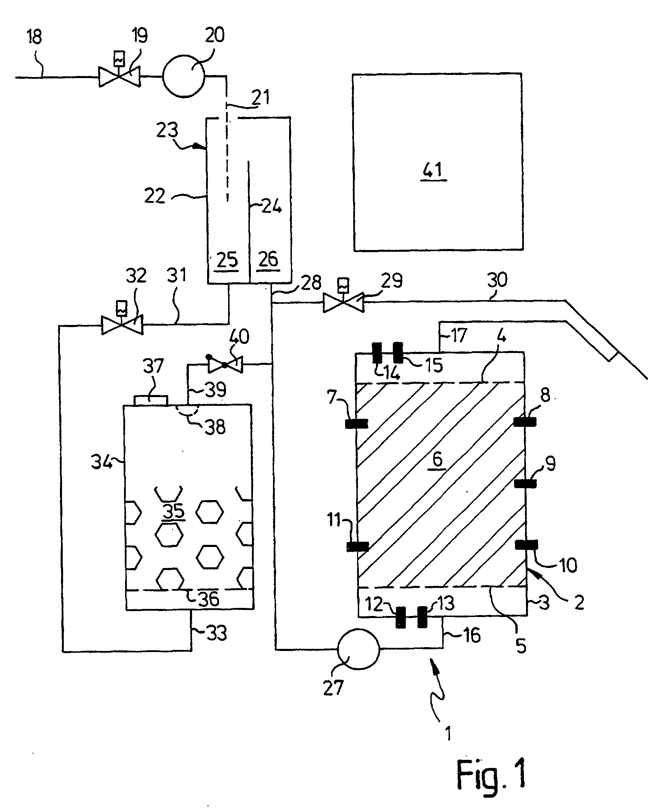

Die Vorrichtung 1 gemäß Fig. 1 umfaßt einen Enthärter 2 bestehend aus einem säulenförmigen Behälter 3, in dem zwischen zwei Sieben 4, 5 Ionentauschermaterial 6 eingefüllt ist.

Verschiedene Elektroden 7, 8, 9, 10, 11 aus korrosionsfestem Material sind ins Innere des Ionentauschermaterials 6 durch die Wandung des Behälters 3 durchgeführt.

Weitere Elektroden 12, 13, 14, 15 sind im oberen bzw. unteren Bereich des Enthärters 2 vor bzw. nach den Sieben 4, 5 dargestellt. Diese Elektroden 12, 13, 14, 15 stehen nicht in den mit Ionentauschermaterial 6 gefüllten Raum, können jedoch dadurch, daß der gesamte Behälter 3 im Betrieb mit Elektrolyt gefüllt ist, in Verbindung mit einer der anderen Elektroden auch als Leitwertsensor für die Bestimmung des Leitwerts des Ionentauschers dienen. Durch ihre Anordnung im Bereich des Rohwasserzuflusses 16 kann mit Hilfe der Elektroden 12, 13 zudem der Leitwert des Rohwassers gemessen werden. Dementsprechend kann über die Elektroden 14, 15 durch die Anordnung in der Nähe des Reinwasserabflusses 17 der Leitwert des Reinwassers nach dem Durchlaufen des Enthärters 2 bestimmt werden.

Das dargestellte Ausführungsbeispiel entspricht dem Strömungsplan einer Spülmaschine. Dementsprechend wird über einen Wasseranschluß 18 mit steuerbarem Sperrventil 19 Rohwasser über einen Durchflußmesser 20 und eine Luftstrecke 21, die gestrichelt dargestellt ist, in den Behälter 22 einer Dosiervorrichtung 23 geleitet. Im Behälter 22 bildet eine Trennwand 24 einen Überlauf zwischen einer Dosierkammer 25 und einer Durchflußkammer 26. Von der Durchflußkammer 26 gelangt Rohwasser zum Rohwasserzufluß 16 des Enthärters 2, wobei vorliegend ein Temperatursensor 27 zwischengeschaltet ist.

In der Nähe des Abflusses 28 aus der Durchflusskammer 26 ist ein regelbares Sperrventil 29 in einer Bypassleitung 30 angeordnet, die den Enthärter 2 umgeht und mit dem Reinwasserabfluß 17 in Verbindung steht. Diese Verbindung kann beispielsweise durch einen Zufluß beider Leitungen in einen gemeinsamen Innenraum einer Spülmaschine erfolgen.

Bei Erschöpfung des Ionentauschermaterials 6 muß der Enthärter 2 regeneriert werden. Hierzu ist in einer Abflußleitung 31 aus der stets gefüllten Dosierkammer 25 ein steuerbares Sperrventil 32 vorgesehen. Die Leitung 31 geht über in den Zufluß 33 eines Salzvorratbehälters 34. Im Innern des Salzvorratbehälters 34 ist Regeneriersalz 35 auf einem Sieb 36 aufgefüllt. Die Befüllung geschieht über eine Füllöffnung 37, die bei herkömmlichen Spülmaschinen am Boden des Spülraumes zugänglich ist.

Ein oberes Trennsieb 38 verhindert ein Ausschwemmen des Salzes in den Soleabfluß 39, in dem weiterhin ein Rückschlagventil 40 angeordnet ist, bevor er in den Rohwasserzufluß 16 des Enthärters 2 mündet.

Eine Auswerte- und Regeleinheit 41 ist schematisch in Fig. 1 angedeutet.

Die Auswerte- und Regeleinheit 41 steuert die regelbaren Sperrventile 19, 20, 29 und 32 und wertet die Messwerte an den Elektroden 7 bis 15 aus. Sie erhält weiterhin die Meßdaten des Durchflußmessers 20 sowie des Temperatursensors 27.

Mit Hilfe des Sperrventils 29 wird das aus dem Enthärter 2 abströmende Reinwasser mit Rohwasser verschnitten. Dieses Sperrventil 29 wird entsprechend zeitlich getaktet geöffnet bzw. geschlossen, um die gewünschte Mischwasserhärte zu erreichen. Anstelle des Sperrventils 29 könnte auch eine Querschnittsdrossel mit regelbarem Querschnitt vorgesehen werden, die nicht getaktet betrieben wird.

Mit Hilfe des Ventils 32 läßt sich der Regeneriervorgang starten. Hierzu ist das Sperrventil 19 im Wasserzufluß 18 geschlossen. Beim Öffnen des Ventils 32 wird die durch das Volumen des Dosierkammer 25 genau bestimmte Wassermenge von unten in den Salzvorratsbehälter 35 geführt, wodurch ein entsprechend vorgegebenes Volumen an Salzlösung über das Rückschlagventil 40 und den Rohwasserzufluß 16 in den Enthärter 2 gelangt. Diese Salzsole regeneriert das Ionentauschermaterial 6 und wird nach dem Regeneriervorgang über den Reinwasserausfluß 17 ausgespült. Anschließend steht der Enthärter 2 wieder für weitere Spülgänge zur Verfügung.

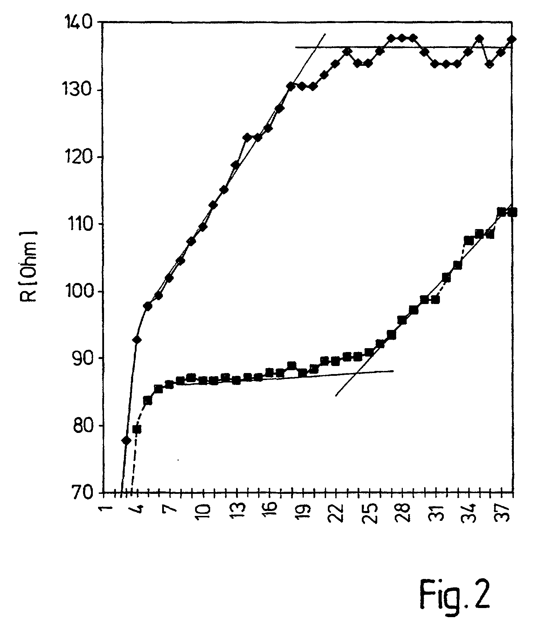

Fig. 2 zeigt den Widerstand des Ionentauschermaterials 6 abhängig vom Wasserdurchsatz durch den Enthärter 2. Die beiden Meßkurven stellen hierbei zwei Meßwerte eines unteren, beispielsweise durch die Elektroden 10, 11 gebildeten Leitwertsensors sowie eines oberen, beispielsweise durch die Elektroden 7, 8 gebildeten zweiten Leitwertsensors dar.

In Fig. 2 entspricht hierbei die obere Kurve dem unteren Leitwertsensor und die untere Kurve dem oberen Leitwertsensor. Die Skala der Abzisse gibt die Anzahl der durchgeführten Spülschritte einer Spülmaschine, die Skala der Ordinate den Widerstand des Ionentauschermaterials 6 an. Es ist deutlich erkennbar, daß zunächst der Widerstand des Ionentauschers im unteren Ionentauscherbereich, d. h. des ersten Leitwertsensors ansteigt, da in diesem Bereich des Enthärters 2 bei noch unbeladenem Enthärter 2 zunächst hauptsächlich der Ionenaustausch stattfindet.

Mit zunehmender Durchflußmenge, d. h. mit zunehmender Anzahl von Spülschritten, steigt auch der Widerstand des zweiten Leitwertsensors im oberen Bereich des Enthärters 2 an. Die dargestellte Messung endet bei Spülschritt 38. Würde man die Messung fortsetzen, so würden sich beide Kurven annähern, sofern die Geometrie der beiden Leitwertsensoren und das dazwischen befindliche Ionentauschermaterial 6 vergleichbar ist. In diesem Sinne konnten beispielsweise die Meßwerte zwischen den Elektroden 7, 8 bzw. 10, 11 verglichen werden.

Natürlich ergibt eine Messung diagonal zum Ionentauscher 2, beispielsweise zwischen den Elektroden 8 und 11 einen anderen Widerstand, da hier über eine längere Strecke gemessen wird. Auch der zeitliche Verlauf der diagonalen Messung zwischen diesen beiden Elektroden sieht naturgemäß von den dargestellten Kurven verschieden aus. Er wird, sofern über die stromdurchflossene Weglänge der Leitwert korrigiert wird, einen Kurvenverlauf zeigen, der genau zwischen den beiden dargestellten Kurven liegt, da hier über die Höhe des Enthärters 2 gemittelt gemessen wird.

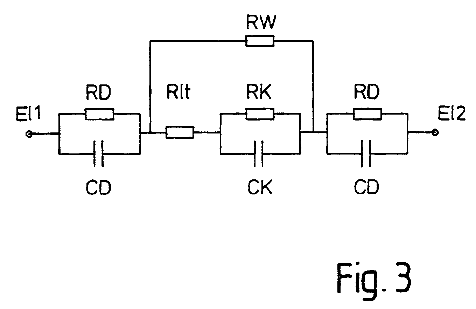

Zur Bereinigung der Meßwerte an den Elektroden 7 bis 15 müssen verschiedene Störeinflüße berücksichtigt werden. In Fig. 3 ist ein Ersatzschaltbild für die elektrischen Verhältnisse im Enthärter 2 dargestellt, aus dem die Störeinflüße hervorgehen. Zwei Elektroden eines Leitwertsensors sind mit E11 bzw. E12 gekennzeichnet. Beim Übergang in den Elektrolyten von der Elektrode liegt jeweils ein ohmscher Durchtrittswiderstand RD sowie eine sogenannte Doppelschichtkapazität CD vor. Anschließend folgt der Widerstand des Ionentauschermaterials RIt, wobei beim Übergang von einzelnen Körnern der Ionentauscherschüttung ein Korngrenzenwiderstand RK sowie eine entsprechende Korngrenzenkapazität CK zu berücksichtigen ist. Da der gesamte Raum mit Wasser bzw. Elektrolyt gefüllt ist, muß parallel hierzu der Widerstand des Elektrolyten RW berücksichtigt werden.

Maßgeblich für den Beladungszustand ist der ohmsche Widerstand des Ionentauschermaterials RIt. Der Durchtrittswiderstand RD sowie die Doppelschichtkapazität CD hängen von der Geometrie, dem Material oder sonstigen Parametern, beispielsweise der Korrosion der Oberfläche der Elektroden ab, und sind über eine Kalibrierung des Leitwertsensors zu kompensieren. Der Widerstand des Elektrolyten RW kann auf der Rohwasser- oder auf der Reinwasserseite ermittelt werden.

Hierzu eignen sich bei einer Anordnung gemäß Fig. 1 beispielsweise die Elektroden 14, 15 bzw. 12, 13. Da auf der Reinwasserseite die Korrosion geringer ist, wird vorzugsweise auf dieser Seite gemessen. Die Differenzen der Äquivalentleitfähigkeiten der ausgetauschten Ionen sind sehr gering, so daß es in der wässrigen Lösung unerheblich ist, ob vor oder nach dem Enthärten die Leitfähigkeit des Elektrolyten gemessen wird.

Die Messung der Leitfähigkeit erfolgt vorzugsweise mit mittelfrequenter Wechselspannung in einem Bereich zwischen 0, 1 und 10 kHz, beispielsweise mit 5 kHz. In diesem Bereich wird der Durchtrittswiderstand durch die Doppelschichtkapazität überbrückt, die in diesem Frequenzbereich aufgrund ihrer Kapazität nahezu keinen Widerstand bietet. Somit sind sowohl der Durchtrittswiderstand als auch die Doppelschichtkapazität zu vernachlässigen. Weiterhin ist die Korngrenzenkapazität CK sehr klein. Daher kann auch dieser Wert bei der vorgeschlagenen Frequenz vernachlässigt werden.

Somit bleibt als zu berücksichtigende Größe der Korngrenzenwiderstand übrig, der wiederum abhängig ist vom Widerstand des Wassers bzw. des Elektrolyten RW. Es hat sich gezeigt, daß der normierte Widerstand des Ionentauschers RIt sich durch die nachfolgende Gleichung bestimmen läßt:

$$RIt=RW*RIS*Zellkonstante/(RW-RIS*Zellkonstante)-RK+Offset$$

RIS ist der gemessene Widerstand der Ionenaustauscherschüttung, die Zellkonstante und der Wert des Offset sind abhängig von der Elektrodenanordnung und von der Geometrie der Austauschersäule und haben beispielsweise Wert von 0,2 bzw. 80. Der Korngrenzenwiderstand RK ist abhängig vom eingesetzten Ionenaustauscher und dem Widerstand des Wassers und hat beispielsweise einen Wert von 0,04 * RW.

Da bei einer Änderung des Rohwasser- bzw. Reinwasserleitwertes, beispielsweise aufgrund einer Änderung des Neutralsalzgehaltes sich auch der Widerstand der Ionentauscherschüttung ändert, wäre ein Meßverfahren ohne Normierung wie vor beschrieben fehlerbelastet.

Die Normierung ist mit den Meßwerten von den Elektroden E11 und E12 sowie einer Leitwertmeßung des Rohwassers bzw. des Reinwassers möglich. Bevorzugt wird hierbei auf eine Normtemperatur unter Berücksichtigung der Temperaturabhängigkeit der Leitwerte normiert.

Wie bereits oben angeführt ist aus der Änderung des Beladungszustandes des Ionentauschers in Abhängigkeit von der mit Hilfe des Durchflußmessers 20 erfaßten aufbereiteten Wassermenge die Rohwasserhärte zu berechnen. Weiterhin kann über die Rohwasserhärte und den Beladungszustand des Ionentauschers auf die Reinwassermenge rückgeschlossen werden.

Das Ersatzschaltbild gemäß Fig. 3 kann bei Bedarf auch speziellen Ionentauscherformen, beispielsweise schaumförmigen oder pulverförmigen Ionentauschern, angepaßt werden.

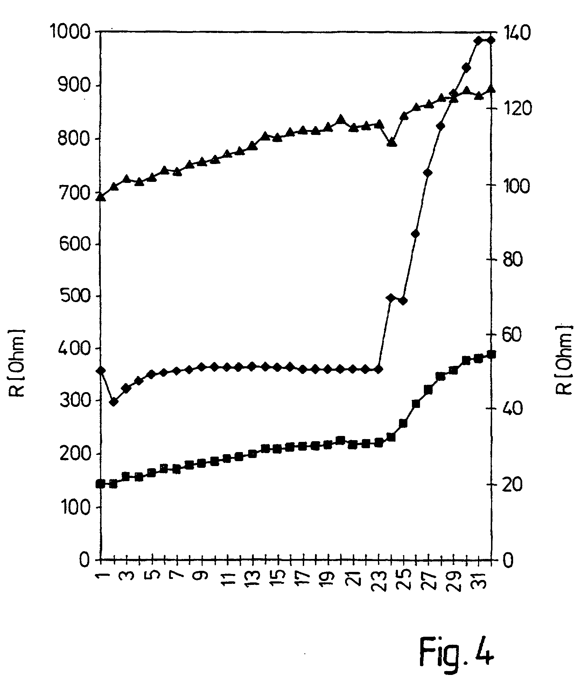

Fig. 4 veranschaulicht die Abhängigkeit des Ionentauscherwiderstandes abhängig vom Wasserdurchsatz, wobei dieser Widerstand nach einem Verfahren der vorbeschriebenen Art normiert ist. Die Abzisse des Diagramms zeigt die Anzahl der durchgeführten Spülschritte. Die am linken Rand aufgetragene Ordinate zeigt eine von der am rechten Rand aufgetragenen Ordinate verschiedene Widerstandsskala für einen ohmschen Widerstand. Die linke Skala gilt für die beiden unteren, d. h. mit Quadraten und Rauten versehenen Meßkurven, die rechte Skala die obere, d. h. mit Dreiecken markierte Kurve.

Jeder Spülschritt entspricht in etwa einer Durchflußmenge von 4 l Wasser. Mit zunehmender Beladung des Enthärters nimmt der elektrische Widerstand zwischen den Elektroden zu. Diese Messung ist in der unteren Kurve mit quadratischen Meßpunkten dargestellt. Die darüberliegende mit Rauten markierte Kurve zeigt den Leitwert des Rohwassers, das bei dieser Messung verwendet wurde. Bei Spülschritt Nr. 22 wurde bewußt eine Veränderung des Rohwasserleitwertes herbeigeführt. Hierdurch erklärt sich der steile Anstieg dieser Kurve in diesem Bereich. Die obere, mit Dreiecken markierte Kurve zeigt den mit Hilfe des oben beschriebenen Verfahrens normierten Widerstandswert des Ionentauschers. Diese obere Kurve ist nahezu unabhängig von der dramatischen Leitwertänderung des Rohwassers. Somit ist durch die beschriebene Verfahrensweise der absolute Beladungsgrad des Ionenaustauschers unabhängig vom Leitwert des Rohwassers zu ermitteln.

Alle gemessenen bzw. für die Regelung der erfindungsgemäßen Vorrichtung 1 erforderlichen Daten können in einer Speichereinheit der Auswerte- und Regeleinheit 41 abgelegt werden. Die Umrechnungsdaten sowie Kriterien für die Einleitung von Steuerschritten, beispielsweise eines Regeneriervorganges, können beispielsweise auch in Form von Kennlinien, Tabellen oder Umrechnungsformeln hinterlegt werden.

Wie bereits erwähnt ist aufgrund der genauen Kenntnis des Beladungszustandes des Enthärters 2 eine genaue Mischung von Rohwasser und Reinwasser zur Einstellung eines gewünschten Härtegrades möglich. Weiterhin ist eine optimale Ausnutzung der Enthärterkapazität möglich. Die Regeneriervorgänge werden gezielt eingeleitet, wobei keine überschüssige Sole verwendet wird. Hierdurch wird zudem der Salzverbrauch reduziert. Dies hat neben Umweltaspekten auch den Vorteil, daß bei gleich großem Salzbehälter 34 weniger oft nachgefüllt werden muß, was der Bedienungsfreundlichkeit entgegenkommt.

Mit einer Vorrichtung 1 gemäß der Erfindung muß der Bediener der entsprechenden Maschine keinerlei Voreinstellungen vornehmen. Auch die Rohwasserhärte braucht nicht eingestellt zu werden, sondern wird selbsttätig erfaßt.

Selbst die Eichung der Leitwertsensoren, die beispielsweise durch die Elektroden 7 bis 15 gebildet werden, kann selbsttätig und in regelmäßigen Zeitabschnitten vorgenommen werden, indem bei jedem Regenerationsvorgang der Leitwert der Salzsole erfaßt wird. Der über verschiedene Regenerationsvorgänge ermittelte maximale Leitwert entspricht hierbei einer gesättigten Salzlösung. Dieser Wert kann zur Kalibrierung herangezogen werden. Somit können Langzeitdrifts, beispielsweise durch Korrosion oder Beläge an den Elektroden 7 bis 15 kompensiert werden.

Mit Hilfe der dazwischenliegenden Werte, die nicht gesättigter Salzlösung entsprechen, kann der Regenerationsvorgang gesteuert werden. So können beispielsweise bei geringer Salzkonzentration mehrere Regenerationsvorgänge nacheinander eingeleitet werden.

Das System kann sich automatisch wechselnden Rohwasserhärten anpassen. Die vorgeschlagene Sensorik ist nicht nur selbstkalibrierend, sondern robust und preiswert herstellbar. Die erfindungsgemäße Vorrichtung erlaubt eine vollständige automatische Selbstkontrolle des Wasseraufbereitungssystems.

Die Elektroden der vorgeschlagenen Leitwerksensoren können unterschiedliche Formen aufweisen. Sie können beispielsweise als Stabelektroden ausgebildet sein, oder aber in die Siebe 4, 5 am Rand des Ionentauschermaterials 6 integriert werden. Auch zwischengelagerte Siebe sind denkbar. Flächige Elektroden sind in der Lage, über größere Volumina des Ionentauschermaterials 6 gemittelt zu messen.

Bezugszeichenliste:

1  Vorrichtung
2  Enthärter
3  Behälter
4  Sieb
5  Sieb
6  Ionentauschermaterial

| 7 | Elektrode |
|---|---|
| 8 | Elektrode |
| 9 | Elektrode |
| 10 | Elektrode |
| 11 | Elektrode |
| 12 | Elektrode |
| 13 | Elektrode |
| 14 | Elektrode |
| 15 | Elektrode |
| 16 | Rohwasserzufluss |
| 17 | Reinwasserabfluss |
| 18 | Wasseranschluß |
| 19 | Sperrventil |
| 20 | Durchflussmesser |
| 21 | Luftstrecke |
| 22 | Behälter |
| 23 | Dosiervorrichtung |
| 24 | Trennwand |
| 25 | Dosierkammer |
| 26 | Durchflusskammer |
| 27 | Temperaturflusssensor |
| 28 | Abfluss |
| 29 | Sperrventil |
| 30 | Bypassleitung |
| 31 | Abflussleitung |
| 32 | Sperrventil |
| 33 | Zufluss |
| 34 | Salzvorratsbehälter |
| 35 | Regeneriersalz |
| 36 | Sieb |
| 37 | Füllöffnung |
| 39 | Soleabfluss |
| 40 | Rückschlagventil |
| 41 | Auswerte- u. Regeleinheit |

**Patentansprüche**

**1.** Vorrichtung zur Wässerenthärtung, insbesondere für Haushaltsgeräte wie Spülmaschinen, Waschmaschinen oder dergleichen, die einen mit Ionentauschermaterial gefüllten Behälter aufweisen, wobei wenigstens ein Leitwertsensor (7, 8) zur Erfassung des Widerstandes der Ionenautauscherschüttung (RIS) und ein Leitwertsensor zur Erfassung des Wasserwiderstandes (RW) vorhanden ist, **dadurch gekennzeichnet, dass** in einer Auswerteeinheit (41) eine Berechnung des Widerstandes des Ionentauschermaterials (RIt) aus der Messung (RIS) mit einem Leitwertsensor im Ionenauscher vorgesehen ist wobei der erfasste Wasserwiderstand (RW) als zum Widerstand des Ionentauschermaterials (RIt) parallel geschalteter Widerstand in die Berechnungsformel eingeht.

**2.** Vorrichtung nach Anspruch 1, **dadurch gekennzeichnet, daß** mehrere Leitwertsensoren (7, 8, 9, 10, 11) in unterschiedlicher Position bzgl. der Flussrichtung des zu enthärtenden Wassers angeordnet sind.

**3.** Vorrichtung nach einem der vorgenannten Ansprüche, **dadurch gekennzeichnet, daß** eine Ionentauschersäule (3) mit Flussrichtung von unten nach oben vorgesehen ist, wobei ein Leitwertsensor (10, 11) im unteren Drittel und/oder ein weiterer Leitwertsensor (7, 8) im oberen Drittel der Säule (3) angeordnet ist.

**4.** Vorrichtung nach einem der vorgenannten Ansprüche, **dadurch gekennzeichnet, daß** wenigstens ein Leitwertsensor zwei Elektroden (7, 8) aus korrosionsfestem Material umfaßt.

**5.** Vorrichtung nach einem der vorgenannten Ansprüche, **dadurch gekennzeichnet, daß** für wenigstens einen Leitwertsensor (7, 8) zwei Elektroden einander gegenüberliegend angeordnet sind.

6. Vorrichtung nach einem der vorgenannten Ansprüche, **dadurch gekennzeichnet, daß** ein Leitwertsensor eine oder mehrere Spulen zur induktiven Leitwertmessung umfaßt.

7. Vorrichtung nach einem der vorgenannten Ansprüche, **dadurch gekennzeichnet, daß** ein Temperatursensor (27) vorgesehen ist.

8. Vorrichtung nach einem der vorgenannten Ansprüche, **dadurch gekennzeichnet, daß** eine Berücksichtigung des Durchtrittwiderstandes RD zwischen Elektrode und Elektrolyt und/oder des Widerstandes RW des Wassers bzw. Elektrolyten und/oder des Korngrenzenwiderstandes RK des Ionentauschermaterials zur Berechnung des Leitwerts des Ionentauschermaterials aus den Meßwerten eines Leitwertsensoren (7,8) vorgesehen ist.

9. Vorrichtung nach einem der vorgenannten Ansprüche, **dadurch gekennzeichnet, daß** ein Leitwertsensor zur Messung des Leitwertes des Rohwassers und/oder des Reinwassers vorgesehen ist.

10. Vorrichtung nach einem der vorgenannten Ansprüche, **dadurch gekennzeichnet, daß** eine Wechselspannungsquelle für die Leitwertmessung vorgesehen ist.

11. Vorrichtung nach einem der vorgenannten Ansprüche **dadurch gekennzeichnet, daß** die Frequenz der Wechselspannung an Kapazitäten (CD, CK)angepaßt sind, die im Stromfluss zwischen den Elektroden (EL1, EL2) vorhanden sind.

12. Vorrichtung nach einem der vorgenannten Ansprüche, **dadurch gekennzeichnet, daß** in der Auswerteeinheit eine Berücksichtigung der Doppelschichtkapazität CD zwischen Elektrode und Elektrolyt und/oder der Korngrenzenkapazität (CK) zwischen benachbarten Ionentauscherkörnern in einer Ionentauscherschüttung vorgesehen ist.

13. Vorrichtung nach einem der vorgenannten Ansprüche, **dadurch gekennzeichnet, daß** eine Bestimmung der Ionentauscherkapazität bzw. des Beladungsgrades des Ionentauschers aus der Differenz und/oder dem Quotienten der Widerstandswerte des vollständig beladenen und des vollständig regenerierten Ionentauschers (6) vorgesehen ist.

14. Vorrichtung nach einem der vorgenannten Ansprüche, **dadurch gekennzeichnet, daß** der Beladungsgrad des Ionentauschers (6) als Stellgröße für eine Regeleinheit (41) des Regeneriervorgangs vorgesehen ist.

15. Vorrichtung nach einem der vorgenannten Ansprüche, **dadurch gekennzeichnet, daß** ein Regeneriervorgang bei Überschreiten eines Grenzwertes des Ionentauscherwiderstandes (RIt) vorgesehen ist.

16. Vorrichtung nach einem der vorgenannten Ansprüche, **dadurch gekennzeichnet, daß** ein Regeneriervorgang nach Überschreitung eines ersten Grenzwertes der Änderungsgeschwindigkeit und/oder anschließender Unterschreitung eines zweiten Grenzwertes der Änderungsgeschwindigkeit des Ionentauscherwiderstandes vorgesehen ist.

17. Vorrichtung nach einem der vorgenannten Ansprüche, **dadurch gekennzeichnet, daß** ein Regeneriervorgang bei Durchlauf eines Maximums der Leitwertdifferenz zweier in Flussrichtung nacheinander angeordneter Leitwertsensoren (7, 8, 10, 11) vorgesehen ist.

18. Vorrichtung nach einem der vorgenannten Ansprüche, **dadurch gekennzeichnet, daß** eine Bestimmung der Regenerier-Solekonzentration mittels einer Leitwertmessung vorgesehen ist.

19. Vorrichtung nach einem der vorgenannten Ansprüche, **dadurch gekennzeichnet, daß** der Leitwert der gesättigten Sole zur Kalibrierung wenigstens eines Leitwertsensors (7, 8) vorgesehen ist.

20. Vorrichtung nach einem der vorgenannten Ansprüche, **dadurch gekennzeichnet, daß** abhängig von der Konzentration der Regeneriersole zwei oder mehrere Regeneriervorgänge vorgesehen sind.

21. Vorrichtung nach einem der vorgenannten Ansprüche, **dadurch gekennzeichnet, daß** eine Regelung der Soleausspülung aus dem Ionentauscher auf der Grundlage der Leitwertmessung vorgesehen ist.

22. Vorrichtung nach einem der vorgenannten Ansprüche, **dadurch gekennzeichnet, daß** eine Vorrichtung (29, 30) zum dosierten Verschneiden von Roh- und Reinwasser vorgesehen ist.

**23.** Vorrichtung nach einem der vorgenannten Ansprüche, **dadurch gekennzeichnet, daß** ein Durchflussmesser (20) für das Roh- und/oder Reinwasser vorgesehen ist.

**24.** Vorrichtung nach einem der vorgenannten Ansprüche, **dadurch gekennzeichnet, daß** eine Bestimmung der Rohwasserhärte aus der Änderung des Beladungsgrades des Ionentauschers und der Wasserdurchflussmenge vorgesehen ist.

**25.** Vorrichtung nach einem der vorgenannten Ansprüche, **dadurch gekennzeichnet, daß** eine Bestimmung der Reinwasserhärte aus der ermittelten Rohwasserhärte und dem Beladungsgrad des Ionentauschers (6) vorgesehen ist.

**26.** Vorrichtung nach einem der vorgenannten Ansprüche, **dadurch gekennzeichnet, daß** eine Regelung für die Vorrichtung zum Verschneiden von Roh- und Reinwasser auf der Grundlage der durch die Messung des Leitwerts des Ionentauschers ermittelten Werte der Rohwasser- und Reinwasserhärte vorgesehen ist.

**27.** Haushaltsmaschine, insbesondere Spülmaschine oder Waschmaschine, **dadurch gekennzeichnet, daß** eine Vorrichtung (1) zur Wasserenthärtung nach einem der vorgenannten Ansprüche vorgesehen ist.

**Claims**

**1.** Device for water softening, in particular for domestic appliances such as dishwashers, washing machines or the like, with a container filled with ion exchange material, there being at least one conductance sensor (7, 8) for detecting the resistance of the ion exchange filling (R15) and a conductance sensor for detecting the water resistance (RW), **characterised in that** in an evaluation unit (41) a calculation of the resistance of the ion exchange material (RIt) from the measurement (R15) using a conductance sensor in the ion exchanger is provided, the water resistance (RW) detected as resistance switched in parallel with the resistance of the ion exchange material (RIt) going into the calculation formula.

**2.** Device according to claim 1, **characterised in that** a plurality of conductance sensors (7, 8, 9, 10, 11) are arranged in different positions with respect to the flow direction of the water to be softened.

**3.** Device according to either of the preceding claims, **characterised in that** an ion exchange column (3) with upward flow direction is provided, a conductance sensor (10, 11) being arranged in the lower third and/or a further conductance sensor (7, 8) being arranged in the upper third of the column (3).

**4.** Device according to any of the preceding claims, **characterised in that** at least one conductance sensor comprises two electrodes (7, 8) made of corrosion-resistant material.

**5.** Device according to any of the preceding claims, **characterised in that** two electrodes are arranged mutually opposed for at least one conductance sensor (7, 8).

**6.** Device according to any of the preceding claims, **characterised in that** a conductance sensor comprises one or more coils for inductive conductance measurement.

**7.** Device according to any of the preceding claims, **characterised in that** a temperature sensor (27) is provided.

**8.** Device according to any of the preceding claims, **characterised in that** a consideration of the passage resistance (RD) between electrode and electrolyte and/or the resistance (RW) of the water or electrolytes and/or of the particle boundary resistance (RK) of the ion exchange material is provided to calculate the conductance of the ion exchange material from the measured values of a conductance sensor (7, 8).

**9.** Device according to any of the preceding claims, **characterised in that** a conductance sensor for measuring the conductance of the untreated water and/or pure water is provided.

**10.** Device according to any of the preceding claims, **characterised in that** an a.c. source is provided for the conductance measurement.

11. Device according to any of the preceding claims, **characterised in that** the frequency of the alternating current are adapted to capacitors (CD, CK) present in the current conduction between the electrodes (EL1, EL2).

12. Device according to any of the preceding claims, **characterised in that** in the evaluation unit a consideration of the double layer capacitor (CD) between electrode and electrolyte and/or the particle boundary capacitor (CK) between adjacent ion exchange particles in an ion exchange filling is provided.

13. Device according to any of the preceding claims, **characterised in that** a determination of the ion exchange capacity or of the degree of exhaustion of the ion exchange is provided from the difference and/or the quotient of the resistance values of the completely exhausted and of the completely regenerated ion exchange (6).

14. Device according to any of the preceding claims, **characterised in that** the degree of exhaustion of the ion exchange (6) is provided as a control variable for a control unit (41) of the regenerating operation.

15. Device according to any of the preceding claims, **characterised in that** a regenerating operation is provided when a threshold of the ion exchange resistance (RIt) is exceeded.

16. Device according to any of the preceding claims, **characterised in that** a regenerating operation is provided after a first threshold of the change in speed has been exceeded and/or a second threshold of the change in speed of the ion exchange resistance is subsequently not attained.

17. Device according to any of the preceding claims, **characterised in that** a regenerating operation is provided when a maximum in the difference in conductance of two conductance sensors (7, 8, 10, 11) arranged successively in the flow direction is passed.

18. Device according to any of the preceding claims, **characterised in that** a determination of the regenerating brine concentration is provided by means of a conductance measurement.

19. Device according to any of the preceding claims, **characterised in that** the conductance value of the saturated brine is provided for calibrating at least one conductance sensor (7, 8).

20. Device according to any of the preceding claims, **characterised in that** two or more regenerating operations are provided as a function of the concentration of the regenerating brine.

21. Device according to any of the preceding claims, **characterised in that** control of the scouring of the brine from the ion exchange is provided on the basis of the conductance measurement.

22. Device according to any of the preceding claims, **characterised in that** a device (29, 30) for metered dilution of untreated water and pure water is provided.

23. Device according to any of the preceding claims, **characterised in that** a flow meter (20) is provided for the untreated water and/or pure water.

24. Device according to any of the preceding claims, **characterised in that** a determination of the untreated water hardness is provided from the change in the degree of exhaustion of the ion exchange and the rate of water flow.

25. Device according to any of the preceding claims, **characterised in that** a determination of the pure water hardness is provided from the ascertained untreated water hardness and the degree of exhaustion of the ion exchange (6).

26. Device according to any of the preceding claims, **characterised in that** a control for the device for diluting untreated water and pure water is provided on the basis of the values of the untreated water and pure water hardness ascertained from the measurement of the conductance of the ion exchange.

27. Domestic appliance, in particular dishwasher or washing machine, **characterised in that** a device (1) for softening water according to any of the preceding claims is provided.

**Revendications**

1.  Dispositif pour l'adoucissement de l'eau, en particulier pour des appareils ménagers comme des lave-vaisselle, des lave-linge ou analogues, qui présentent un récipient rempli d'une matière d'échangeur d'ions, au moins un capteur de conductance (7, 8) pour détecter la résistance de la charge d'échangeur d'ions (RIS) et un capteur de conductance pour détecter la résistance de l'eau (RW) étant prévus,
    **caractérisé en ce que**, dans une unité d'exploitation (41), il est effectué un calcul de la résistance de la matière de l'échangeur d'ions (RIt) à partir de la mesure (RIS) avec un capteur de conductance dans l'échangeur d'ions, la résistance de l'eau détectée (RW) intervenant comme résistance montée en parallèle par rapport à la résistance de la matière de l'échangeur d'ions (RIt) dans la formule de calcul.

2.  Dispositif selon la revendication 1,
    **caractérisé en ce que** plusieurs capteurs de conductance (7, 8, 9, 10, 11) sont agencés en différentes positions relativement à la direction d'écoulement de l'eau à adoucir.

3.  Dispositif selon une des revendications précitées,
    **caractérisé en ce qu'**une colonne d'échangeur d'ions (3) est prévue avec la direction d'écoulement du bas vers le haut, un capteur de conductance (10, 11) étant agencé dans le tiers inférieur et/ou un autre capteur de conductance (7, 8) dans le tiers supérieur de la colonne (3).

4.  Dispositif selon une des revendications précitées,
    **caractérisé en ce qu'**au moins un capteur de conductance comporte deux électrodes (7, 8) en une matière résistant à la corrosion.

5.  Dispositif selon une des revendications précitées,
    **caractérisé en ce que**, pour au moins un capteur de conductance (7, 8), deux électrodes sont agencées de façon opposée l'une à l'autre.

6.  Dispositif selon une des revendications précitées,
    **caractérisé en ce qu'**un capteur de conductance comporte une ou plusieurs bobines pour la mesure de conductance inductive.

7.  Dispositif selon une des revendications précitées,
    **caractérisé en ce qu'**un capteur de température (27) est prévu.

8.  Dispositif selon une des revendications précitées,
    **caractérisé en ce qu'**il est prévu de tenir compte de la résistance de passage (RD) entre l'électrode et l'électrolyte et/ou de la résistance (RW) de l'eau ou de l'électrolyte et/ou de la résistance des joints des grains (RK) de la matière d'échangeur d'ions pour calculer la conductance de la matière d'échangeur d'ions à partir des valeurs de mesure d'un capteur de conductance (7, 8).

9.  Dispositif selon une des revendications précitées,
    **caractérisé en ce qu'**un capteur de conductance est prévu pour mesurer la conductance de l'eau brute et/ou de l'eau pure.

10. Dispositif selon une des revendications précitées,
    **caractérisé en ce qu'**une source de tension alternative pour la mesure de conductance est prévue.

11. Dispositif selon une des revendications précitées,
    **caractérisé en ce que** les fréquences de la tension alternative sont adaptées aux capacités (CD, CK) qui existent dans le flux de courant entre les électrodes (EL1, EL2).

12. Dispositif selon une des revendications précitées,
    **caractérisé en ce que**, dans l'unité d'exploitation, il est prévu de tenir compte de la capacité double couche (CD) entre l'électrode et l'électrolyte et/ou de la capacité des joints des grains (CK) entre des grains d'échangeur d'ions voisins dans une charge d'échangeur d'ions.

13. Dispositif selon une des revendications précitées,

**caractérisé en ce qu'**une détermination de la capacité de l'échangeur d'ions ou du degré de charge de l'échangeur d'ions à partir de la différence et/ou du quotient des valeurs de résistance de l'échangeur d'ions complètement chargé et de l'échangeur d'ions (6) complètement régénéré est prévue.

14. Dispositif selon une des revendications précitées,
**caractérisé en ce que** le degré de charge de l'échangeur d'ions (6) est prévu comme grandeur de réglage pour une unité de réglage (41) du processus de régénération.

15. Dispositif selon une des revendications précitées,
**caractérisé en ce qu'**un processus de régénération est prévu lors du dépassement d'une valeur limite de la résistance de l'échangeur d'ions (Rlt).

16. Dispositif selon une des revendications précitées,
**caractérisé en ce qu'**un processus de régénération est prévu après dépassement d'une première valeur limite de la vitesse de modification et/ou une non atteinte suivante d'une seconde valeur limite de la vitesse de modification de la résistance de l'échangeur d'ions.

17. Dispositif selon une des revendications précitées,
**caractérisé en ce qu'**un processus de régénération est prévu lors du passage d'un maximum de la différence de conductance de deux capteurs de conductance (7, 8, 10, 11) agencés l'un après l'autre dans la direction d'écoulement.

18. Dispositif selon une des revendications précitées,
**caractérisé en ce qu'**une détermination de la concentration de saumure de régénération est prévue au moyen d'une mesure de conductance.

19. Dispositif selon une des revendications précitées,
**caractérisé en ce que** la conductance de la saumure saturée est prévue pour le calibrage d'au moins un capteur de conductance (7, 8).

20. Dispositif selon une des revendications précitées,
**caractérisé en ce que** deux ou plusieurs processus de régénération sont prévus de façon dépendant de la concentration de la saumure de régénération.

21. Dispositif selon une des revendications précitées,
**caractérisé en ce qu'**un réglage du rinçage de la saumure hors de l'échangeur d'ions est prévu sur la base de la mesure de conductance.

22. Dispositif selon une des revendications précitées,
**caractérisé en ce qu'**un dispositif (29, 30) est prévu pour mêler de façon dosée l'eau brute et l'eau pure.

23. Dispositif selon une des revendications précitées,
**caractérisé en ce qu'**un débitmètre (20) pour l'eau brute et/ou l'eau pure est prévu.

24. Dispositif- selon une des revendications précitées,
**caractérisé en ce qu'**une détermination de la dureté de l'eau brute est prévue à partir de la modification du degré de chargement de l'échangeur d'ions et du débit de l'eau.

25. Dispositif selon une des revendications précitées,
**caractérisé en ce qu'**une détermination de la dureté de l'eau pure est prévue à partir de la dureté de l'eau brute déterminée et du degré de chargement de l'échangeur d'ions (6).

26. Dispositif selon une des revendications précitées,
**caractérisé en ce qu'**un réglage pour le dispositif pour mêler l'eau brute et l'eau pure sur la base des valeurs, déterminées par la mesure de la conductance de l'échangeur d'ions, de la dureté de l'eau brute et de la dureté de l'eau pure est prévu.

27. Appareil ménager, en particulier lave-vaisselle ou lave-linge,

**caractérisé en ce qu'**un dispositif (1) pour l'adoucissement de l'eau selon une des revendications précitées est prévu.

Fig. 1

Fig. 2

Fig. 3

Fig. 4